(19) **Europäisches Patentamt**
**European Patent Office**
**Office européen des brevets**

(11) **EP 4 535 029 A1**

(12) **EUROPEAN PATENT APPLICATION**
published in accordance with Art. 153(4) EPC

(43) Date of publication:
**09.04.2025 Bulletin 2025/15**

(21) Application number: **23811361.7**

(22) Date of filing: **02.02.2023**

(51) International Patent Classification (IPC):
**G01S 7/481** (2006.01)    **G01S 17/34** (2020.01)

(52) Cooperative Patent Classification (CPC):
**G01S 7/481; G01S 17/34**

(86) International application number:
**PCT/JP2023/003321**

(87) International publication number:
**WO 2023/228480 (30.11.2023 Gazette 2023/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.05.2022 JP 2022085810**

(71) Applicant: **PANASONIC INTELLECTUAL PROPERTY MANAGEMENT CO., LTD.**
**Kadoma-shi**
**Osaka 571-0057 (JP)**

(72) Inventors:
• **NARUMI Kenji**
  **Kadoma-shi, Osaka 571-0057 (JP)**
• **TAKAGI Hiroyuki**
  **Kadoma-shi, Osaka 571-0057 (JP)**
• **HISADA Kazuya**
  **Kadoma-shi, Osaka 571-0057 (JP)**

(74) Representative: **Grünecker Patent- und Rechtsanwälte**
**PartG mbB**
**Leopoldstraße 4**
**80802 München (DE)**

(54) **MEASUREMENT DEVICE**

(57)    A measuring device comprises a light source that emits light; an interference optical system that separates the light that is emitted from the light source into reference light and irradiation light for irradiating an object, the interference optical system causing reflecting light that is produced by reflection of the irradiation light by the object and the reference light to interfere with each other to thereby produce interference light; an output fiber that is connected to the interference optical system and that guides the irradiation light; an optical element that is connected to the output fiber and that emits the irradiation light; a first housing that accommodates the light source and the interference optical system; and a second housing that accommodates the first housing, wherein the output fiber is directly extended from the first housing.

FIG. 1

EP 4 535 029 A1

## Description

Technical Field

The present disclosure relates to a measuring device.

Background Art

Hitherto, there has existed a LiDAR (Light Detection and Ranging) technology that, by irradiating an object with light and detecting reflecting light from the object, generates measurement data regarding the distance of the object and/or measurement data regarding the speed of the object. A typical example of a measuring device using the LiDAR technology includes a light source, a photodetector, and a processing circuit. The light source emits light for irradiating an object. The photodetector detects a reflecting wave from the object to thereby output a signal that is based on a time lag of the reflecting wave. On the basis of the signal that has been output from the photodetector, the processing circuit generates measurement data regarding the distance of the object and measurement data regarding the speed of the object by, for example, an FMCW (Frequency Modulated Continuous Wave) technology. PTL 1, PTL 2, and NPL 1 disclose an example of a measuring device using the FMCW technology.

Citation List

Patent Literature

PTL 1: Japanese Patent No. 6274368
PTL 2: Japanese Unexamined Patent Application Publication No. 2019-45200 Non Patent Literature

NPL 1: Christopher V. P. et. al., OFC2016, W4E.3

Summary of Invention

Technical Problem

The present disclosure provides a measuring device that emits to the outside irradiation light for irradiating an object and that is capable of reducing the possibility of unintentional leakage of light to the outside.

Solution to Problem

A measuring device according to an aspect of the present disclosure comprises a light source that emits light; an interference optical system that separates the light that is emitted from the light source into reference light and irradiation light for irradiating an object, the interference optical system causing reflecting light that is produced by reflection of the irradiation light by the object and the reference light to interfere with each other to thereby produce interference light; an output fiber that is connected to the interference optical system and that guides the irradiation light; an optical element that is connected to the output fiber and that emits the irradiation light; a first housing that accommodates the light source and the interference optical system; and a second housing that accommodates the first housing, wherein the output fiber is directly extended from the first housing.

A comprehensive or specific aspect of the present disclosure may be implemented by a system, a device, a method, an integrated circuit, a computer program, or a recording medium, such as a computer-readable recording disk, or may be implemented by any combination of the system, the device, the method, the integrated circuit, the computer program, and the recording medium. The computer-readable recording medium may include, for example, a non-volatile recording medium, such as CD-ROM (Compact Disc-Read Only Memory). The device may include one or more devices. When the device includes two or more devices, the two or more devices may be disposed in one apparatus, or may be separately disposed in two or more separated apparatuses. In the present description and the claims, "device" may mean not only one device, but also a system including a plurality of devices.

Advantageous Effects of Invention

According to the technology of the present disclosure, it is possible to realize a measuring device that emits to the outside irradiation light for irradiating an object and that is capable of reducing the possibility of leakage of unintended light to the outside.

Brief Description of Drawings

[Fig. 1] Fig. 1 is a block diagram schematically showing a structure of a measuring device according to an exemplary first embodiment of the present disclosure.

[Fig. 2] Fig. 2 is a diagram schematically showing, when an object is stationary, changes of the frequency of reference light and the frequency of reflecting light with time.

[Fig. 3] Fig. 3 is a flow chart schematically showing an example of a measurement operation that is executed by a processing circuit.

[Fig. 4A] Fig. 4A is a diagram for illustrating flows of a plurality of light beams that are produced in the measuring device shown in Fig. 1.

[Fig. 4B] Fig. 4B is a diagram for illustrating light path lengths of the flows of the plurality of light beams that are produced in the measuring device shown in Fig. 1.

[Fig. 5] Fig. 5 is a block diagram schematically showing a structure of a measuring device according to a comparative example.

[Fig. 6A] Fig. 6A is a diagram for illustrating flows of a plurality of light beams that are produced in the measuring device shown in Fig. 5.

[Fig. 6B] Fig. 6B is a diagram for illustrating light path lengths of the flows of the plurality of light beams that are produced in the measuring device shown in Fig. 5.

[Fig. 7A] Fig. 7A is a diagram schematically showing an example of a spectrum of a detection signal in the first embodiment.

[Fig. 7B] Fig. 7B is a diagram schematically showing an example of a spectrum of a detection signal in the comparative example.

[Fig. 8] Fig. 8 is a block diagram schematically showing a structure of a measuring device according to an exemplary second embodiment of the present disclosure.

[Fig. 9] Fig. 9 is a block diagram schematically showing a structure of a measuring device according to an exemplary third embodiment of the present disclosure.

[Fig. 10] Fig. 10 is a block diagram schematically showing a structure of a measuring device according to an exemplary fourth embodiment of the present disclosure.

[Fig. 11] Fig. 11 is a block diagram schematically showing a structure of a measuring device according to an exemplary fifth embodiment of the present disclosure.

[Fig. 12] Fig. 12 is a block diagram schematically showing a structure of a measuring device according to an exemplary sixth embodiment of the present disclosure.

[Fig. 13] Fig. 13 is a block diagram schematically showing a structure of a measuring device according to an exemplary seventh embodiment of the present disclosure.

Description of Embodiments

In the present disclosure, all or a part of a circuit, a unit, a device, a member, or a portion, or all or a part of functional blocks in a block diagram may be implemented by, for example, one electronic circuit or a plurality of electronic circuits including a semiconductor device, a semiconductor integrated circuit (IC), or an LSI (large scale integration). The LSI or IC may be formed by integration on one chip or by combining a plurality of chips. For example, functional blocks other than a storage element may be integrated on one chip. Here, although the circuit is called an LSI or an IC, depending upon the degree of integration, the circuit may be called a system LSI, a VLSI (very large scale integration), or a ULSI (ultra large scale integration). A Field Programmable Gate Array (FPGA) that is to be programmed after manufacturing the LSI, or a reconfigurable logic device that can reorganize joining relationships inside the LSI or can set up circuit divisions inside the LSI can be used for the same purpose.

Further, all or a part of functions or operations of a circuit, a unit, a device, a member, or a portion can be executed by software processing. In this case, when the software is recorded on a non-transitory recording medium, such as one or a plurality of ROM, an optical disc, or a hard disk drive, and the software has been executed by a processing device (processor), a function that has been specified by the software is executed by the processing device (processor) and a peripheral device. The system or the device may include one or a plurality of non-transitory recording media, a processing device (processor), and a required hardware device, such as an interface.

In the present disclosure, "light" means electromagnetic waves including not only visible light (wavelengths of approximately 400 nm to approximately 700 nm) but also ultraviolet rays (wavelengths of approximately 10 nm to approximately 400 nm) and infrared rays (wavelengths of approximately 700 nm to approximately 1 mm). In the present description, ultraviolet rays are also called "ultraviolet light", and infrared rays are also called "infrared light".

Exemplary embodiments of the present disclosure are described below. Note that the embodiments that are described below are all comprehensive or specific examples. In the embodiments below, for example, numerical examples, shapes, structural components, arrangement positions and connection modes of the structural components, steps, and the order of steps are examples, and are not intended to limit the present disclosure. Of the structural components in the embodiments below, the structural components that are not described in independent claims that indicate the broadest concepts are described as optional structural components. Each figure is a schematic view, and is not necessarily an exact illustration. Further, in each figure, structural components that are essentially the same are given the same reference signs, and explanations that overlap may be omitted or simplified.

First, underlying knowledge forming the basis of the present disclosure is described. PTL 1 discloses a laser radar device that measures, by irradiating an object to be measured with light and receiving reflecting light produced by the irradiation, the distance from the device to the object. PTL 2 discloses a distance measuring device using an FMCW technology that, by removing the effects of nonlinear chirp of laser light, accurately measures the distance from the device to an object. NPL 1 discloses a distance measuring device using an FMCW technology that, by forming an optical system in an on-chip state, is capable of reducing the size of the device.

In recent years, an FMCW-LiDAR technology that, with regard to distance, realizes a wide dynamic range and high resolution, that is unlikely to be influenced by disturbance, and that is capable of detecting the speed of an object that moves at a high speed is being developed. By using light instead of millimeter waves, it is possible to relatively reduce a spot diameter of light for irradiating the object, and to more accurately obtain measurement data of the object.

A measuring device using the FMCW-LiDAR technology includes a light source and an interference optical system. The interference optical system separates laser light emitted from the light source into reference light and irradiation light, and superposes the reference light and reflecting light produced by irradiation of an object with the irradiation light to thereby produce interference light. By detecting the interference light by a photodetector, it is possible to obtain measurement data of the object.

The intensity of laser light that is emitted from the measuring device is, for example, classified according to class by C6802, "Safety of Laser Products", of JIS (Japanese Industrial Standards). From the viewpoint of safety with respect to the eyes, that is, eye safety, it is desirable that the intensity of laser light that is emitted to the outside satisfy class 1.

Even if the intensity of laser light that is emitted to the outside satisfies class 1, in the measuring device, laser light having an intensity greater than class 1 may be emitted from a laser light source. In this case, from the viewpoint of eye safety, it is desirable that light coming from the light source and/or the interference optical system does not unintentionally leak to the outside of the measuring device. In the measuring device, even if laser light having an intensity that satisfies class 1 is always emitted from the laser light source, when light unintentionally leaks to the outside of the measuring device, there is a possibility that measurement data of an object cannot be accurately obtained due to reflecting light that is produced by irradiation of the object with the leaked light.

From the above, it is desirable to reduce the possibility of unintentional leakage of light to the outside from the measuring device that emits to the outside irradiation light for irradiating an object. The present inventor has conceived of measuring devices according to embodiments of the present disclosure that are capable of reducing such a possibility. The measuring devices according to the present embodiments using the FMCW-LiDAR technology include a light source, an interference optical system, a first housing that accommodates the light source and the interference optical system, and a second housing that accommodates the first housing. Compared with a structure that does not include the first housing that accommodates the light source and the interference optical system, the measuring devices according to the present embodiments are capable of reducing the possibility of unintentional leakage of light coming from the light source and the interference optical system to the outside of the measuring devices. The measuring devices according to the embodiments of the present disclosure are described below.

A measuring device according to a first section comprises a light source that emits light; an interference optical system that separates the light that is emitted from the light source into reference light and irradiation light for irradiating an object, the interference optical system causing reflecting light that is produced by reflection of the irradiation light by the object and the reference light to interfere with each other to thereby produce interference light; an output fiber that is connected to the interference optical system and that guides the irradiation light; an optical element that is connected to the output fiber and that emits the irradiation light; a first housing that accommodates the light source and the interference optical system; and a second housing that accommodates the first housing. The output fiber is directly extended from the first housing.

The measuring device is capable of reducing the possibility of unintentional leakage of light to the outside. Further, since the output fiber is directly extended from the first housing, it is possible to reduce noise in a spectrum of a detection signal.

In a measuring device according to a second section based on the measuring device according to the first section, the output fiber is extended from the first housing and the second housing. The optical element is disposed on an outer side of the second housing.

In the measuring device, even if the optical element is disposed on the outer side of the second housing, it is possible to reduce noise in a spectrum of a detection signal.

In a measuring device according to a third section based on the measuring device according to the first section, the output fiber is extended from the first housing. The optical element is disposed on an outer side of the first housing and on an inner side of the second housing. The second housing includes a light transmissive window that transmits the irradiation light.

In the measuring device, even if the optical element is disposed on the outer side of the first housing and on the inner side of the second housing, it is possible to reduce noise in a spectrum of a detection signal.

In a measuring device according to a fourth section based on the measuring device according to any one of the first section to the third section, the optical element emits the irradiation light and receives the reflecting light. The interference optical system includes a first light splitter, a second light splitter, and a circulator or a third light splitter. The first light splitter separates the reference light and the irradiation light from each other and outputs the reference light and the irradiation light, inputs into the second light splitter the reference light that has been output, and inputs into the circulator or the third light splitter the irradiation light that has been output. The circulator or the third light splitter outputs the irradiation light coming from the first light splitter and inputs the irradiation light into the optical element, and outputs the reflecting light coming from the optical element and inputs the reflecting light into the second light splitter. The second light splitter causes the reflecting light coming from the circulator or the third light splitter and the reference light coming from the first light splitter to interfere with each other to thereby produce the interference light.

In the measuring device, it is possible to produce the interference light by using the first light splitter, the second light splitter, and the circulator, or by using the first light splitter, the second light splitter, and the third light splitter.

In a measuring device according to a fifth section based on the measuring device according to the fourth section, when a light path length of a first path from the first light splitter to a photodetector that detects the interference light is $d_1$, a light path length of a second path from the second light splitter to the optical element is $d_2$, a light path length of a third path from the optical element to the photodetector is $d_3$, and a light path length of a fourth path from the first light splitter to the photodetector through a noise light path of the circulator or the third light splitter is $d_4$, a relationship

$$|d_2 + d_3 - d_1| \leq |d_4 - d_1|$$

is satisfied.

In the measuring device, it is possible to accurately obtain measurement data of an object without narrowing a distance range in which measurement of the distance of the object and/or measurement of the speed of the object can be performed.

A measuring device according to a sixth section based on the measuring device according to any one of the first section to the fifth section, further comprises a signal fiber that guides the interference light coming from the interference optical system; and a photodetector that is connected to the signal fiber and that detects the interference light.

The measuring device is capable of detecting the interference light by using the photodetector.

In a measuring device according to a seventh section based on the measuring device according to the sixth section, the photodetector is disposed on an outer side of the first housing and on an inner side of the second housing.

In the measuring device, since the photodetector is disposed on the outer side of the first housing, maintenance of the photodetector is facilitated.

In a measuring device according to an eighth section based on the measuring device according to the seventh section, the signal fiber includes two connectors and a receptacle for connecting the two connectors. The receptacle is attached to the first housing.

In the measuring device, it is possible to attach and detach the photodetector.

In a measuring device according to a ninth section based on the measuring device according to the sixth section, the photodetector is disposed on an inner side of the first housing.

In the measuring device, since the signal fiber that connects the photodetector and the interference optical system need not include a connector and a receptacle, it is possible to simplify the structural components of the measuring device and to keep component costs low.

In a measuring device according to a tenth section based on the measuring device according to the ninth section, the interference optical system and the photodetector are formed in an on-chip state.

In the measuring device, it is possible to reduce the size of the measuring device.

A measuring device according to an eleventh section based on the measuring device according to the sixth section further comprises a processing circuit that controls an operation of the light source and an operation of the photodetector and that processes a signal that is output from the photodetector, the processing circuit being positioned on an outer side of the first housing and on an inner side of the second housing.

In the measuring device, heat that is emitted from the processing circuit can be effectively discharged to the outside through the second housing.

In a measuring device according to a twelfth section based on the measuring device according to the eleventh section, the light source is capable of changing a frequency of the light with time.

In the measuring device, it is possible to perform measurement of the distance of an object and/or measurement of the speed of the object by the FMCW-LiDAR technology.

A measuring device according to a thirteenth section comprises a light source that emits light; an interference optical system that separates the light that is emitted from the light source into reference light and irradiation light for irradiating an object, the interference optical system causing reflecting light that is produced by reflection of the irradiation light by the object and the reference light to interfere with each other to thereby produce interference light; an output fiber that is connected to the interference optical system and that guides the irradiation light; an optical element that is connected to the output fiber and that emits the irradiation light; a photodetector that detects the interference light; a first housing that accommodates the light source and the interference optical system; a second housing that accommodates the first housing; and a processing circuit that controls an operation of the light source and an operation of the photodetector and that processes a signal that is output from the photodetector, the processing circuit being disposed on an outer side of the first housing and on an inner side of the second housing.

In the measuring device, it is possible to reduce the possibility of unintentional leakage of light to the outside. Further, heat that is emitted from the processing circuit can be effectively discharged to the outside through the second housing.

In a measuring device according to a fourteenth section based on the measuring device according to the thirteenth section, the output fiber is one continuous optical fiber.

In the measuring device, it is possible to reduce noise in a spectrum of a detection signal by using the one continuous optical fiber.

In a measuring device according to a fifteenth section based on the measuring device according to the thirteenth section or the fourteenth section, the light source is capable of changing a frequency of the light with time.

In the measuring device, it is possible to perform measurement of the distance of an object and/or measurement of the speed of the object by the FMCW-LiDAR technology.

A measuring device according to a sixteenth section comprises a light source that emits light; an interference optical system that separates the light that is emitted from the light source into reference light and irradiation light for irradiating an object, the interference optical system causing reflecting light that is produced by reflection of the irradiation light by the object and the reference light to interfere with each other to thereby produce interference light; an output fiber that is connected to the interference optical system and that guides the irradiation light; an optical element that is connected to the output fiber and that emits the irradiation light; a first housing that accommodates the light source and the interference optical system; and a second housing that accommodates the first housing. The output fiber is disposed on an inner side of the first housing. The optical element is disposed on the inner side of the first housing. The first housing includes a first light transmissive window that transmits the irradiation light. The second housing includes a second light transmissive window that transmits the irradiation light.

In the measuring device, it is possible to reduce the possibility of unintentional leakage of light to the outside. Further, since a fiber extending portion for extending the output fiber is not required, it is possible to simplify the structural components of the measuring device and to keep component costs low.

(First Embodiment)

[Measuring Device]

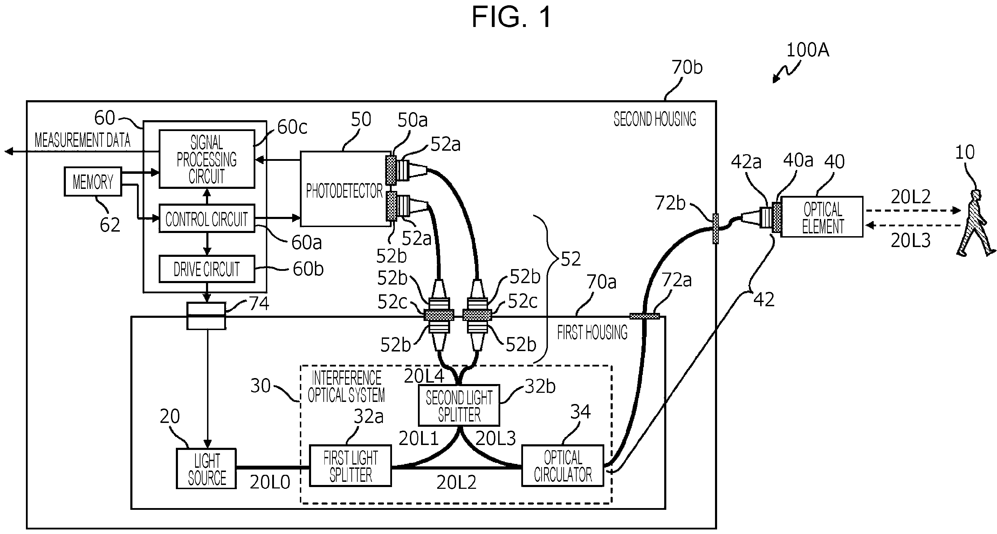

First, with reference to Fig. 1, a structural example of a measuring device according to a first embodiment of the present disclosure is described. Fig. 1 is a block diagram schematically showing the structure of the measuring device according to the exemplary first embodiment of the present disclosure. In Fig. 1, a person is shown as an object 10 to be measured. In addition to a person, the object 10 may be any other object, such as a vehicle or a building.

A measuring device 100A shown in Fig. 1 includes a light source 20, an interference optical system 30, an optical element 40, an output fiber 42, a photodetector 50, two signal fibers 52, a processing circuit 60, and a memory 62. The measuring device 100A further includes a first housing 70a and a second housing 70b, the first housing 70a accommodating the light source 20, the interference optical system 30, the photodetector 50, the processing circuit 60, and the memory 62, and the second housing 70b accommodating the first housing 70a. Thick lines shown in Fig. 1 indicate optical fibers that connect two structural components to each other. Arrowed solid lines shown in Fig. 1 indicate transmission and reception of signals. Arrowed broken lines shown in Fig. 1 indicate flows of light. Of the structural components of the measuring device 100A according to the first embodiment, a part of the structural components and the remaining structural components may be separately manufactured and/or sold. A part of the structural components may be, for example, at least one of the photodetector 50, the processing circuit 60, and the memory 62.

In the measuring device 100A according to the first embodiment, by emitting irradiation light 20L2 for irradiating the object 10 and by receiving reflecting light 20L3 that is produced by the irradiation of the object 10 with the irradiation light 20L2, it is possible to obtain measurement data regarding the distance of the object 10 and/or measurement data regarding the speed of the object 10. Compared with a structure that does not include the first housing 70a that accommodates the light source 20 and the interference optical system 30, the measuring device 100A according to the first embodiment is capable of reducing the possibility of unintentional leakage of light coming from the light source 20 and the interference optical system 30 to the outside of the measuring device 100A.

The structural components of the measuring device 100A are described below.

<Light Source 20>

The light source 20 emits laser light 20L0. The light source 20 is capable of changing the frequency of the laser light 20L0. The frequency may be changed with time in, for example, a triangular waveform or a saw shape at a fixed time period. The time period may be, for example, greater than or equal to 1 $\mu$s and less than or equal to 10 ms. The time period may vary. A change width of the frequency may be, for example, greater than or equal to 100 MHz and less than or equal to 1 THz.

The wavelength of the laser light 20L0 may be included in, for example, a wavelength region of near infrared light of greater than or equal to 700 nm and less than or equal to 2000 nm. Sunlight includes near infrared light and visible light, and the light amount of near infrared light is less than the light amount of visible light. Therefore, when the near infrared light is used as the laser light 20L0, it is possible to reduce the effects as noise of the sunlight. The wavelength of the laser light 20L0 need not include the wavelength region of near infrared light. The wavelength of the laser light 20L0 may include a wavelength region of visible light of greater than equal to 400 nm and less than or equal to 700 nm, or may include a wavelength region of ultraviolet light.

The light source 20 may include, for example, a distributed feedback (DFB) laser diode or an external cavity (EC) laser diode. These laser diodes are low in cost and are small, are capable of single-mode oscillation, and are capable of modulating the frequency of the laser light 20L0 in accordance with an applied electrical current amount. When, as the light source 20, a laser diode that is capable of emitting laser light having a high intensity exceeding class 1 is used, it is possible to stably modulate the frequency of the laser light 20L0. However, the intensity of the laser light 20L0 that is emitted from the light source 20 is adjusted such that the intensity of laser light that is emitted to the outside satisfies class 1.

The light source 20 is connected to a first light splitter 32a. An attenuator that adjusts the intensity of the laser light 20L0 may be disposed between the light source 20 and the first light splitter 32a.

<Interference Optical System 30>

The interference optical system 30 includes the first light splitter 32a, a second light splitter 32b, and an optical circulator 34. The first light splitter 32a splits the laser light 20L0 emitted from the light source 20 into reference light 20L1 and the irradiation light 20L2 for irradiating the object 10, and outputs the reference light 20L1 and the irradiation light 20L2. The intensity of the reference light 20L1 may be, for example, greater than or equal to 1% and less than or equal to 10% of the intensity of the laser light 20L0 that is input into the first light splitter 32a. The first light splitter 32a inputs the outputted reference light 20L1 into the second light splitter 32b and inputs the outputted irradiation light 20L2 into the optical circulator 34. The first light splitter 32a is connected to the second light splitter 32b and the optical circulator 34.

The optical circulator 34 outputs the irradiation light 20L2 coming from the first light splitter 32a, and inputs the irradiation light 20L2 into the optical element 40 through the output fiber 42. The optical circulator 34 further outputs the reflecting light 20L3 that is produced by reflection of the irradiation light 20L2 by the object 10, and inputs the reflecting light 20L3 into the second light splitter 32b. The optical circulator 34 is connected to the first light splitter 32a, the second light splitter 32b, and the optical element 40.

The second light splitter 32b inputs interference light 20L4, in which the reference light 20L1 and the reflecting light 20L3 have been caused to interfere with each other by being superposed upon each other, into the photodetector 50 through the two signal fibers 52. The second light splitter 32b is connected to the first light splitter 32a, the optical circulator 34, and the photodetector 50.

<Optical Element 40>

The optical element 40 outputs the irradiation light 20L2 coming from the optical circulator 34 to the outside through the output fiber 42. The optical element 40 further receives the reflecting light 20L3 and inputs the reflecting light 20L3 into the optical circulator 34 through the output fiber 42. The optical element 40 may be, for example, a collimator lens that collimates the irradiation light 20L2. In the present description, "collimate" refers to not only a case in which the irradiation light 20L2 is formed into parallel light but also a case in which the spreading of the irradiation light 20L2 is reduced.

The optical element 40 may be a condensing lens that condenses the irradiation light 20L2, or may be a diffusing lens that diffuses the irradiation light 20L2. The optical element 40 may be a diffraction grating that emits to the outside the irradiation light 20L2 as zeroth-order diffraction light and/or ±Nth-order diffraction light (where N is a natural number). By performing measurement of the distance of the object 10 and/or measurement of the speed of the object 10 by using a plurality of diffraction light beams that are emitted in directions that are different from each other, it is possible to widen the angular range of the measurement of the distance of the object 10 and/or the measurement of the speed of the object 10. The optical element 40 may have a structure in which at least two of the collimator lens, the condensing lens, the diffusing lens, and the diffraction grating are combined.

The measuring device 100A may further include a light deflector that changes the direction of the irradiation light 20L2 that is emitted from the optical element 40. The light deflector may be, for example, any one of deflectors selected from the group consisting of a galvanometer scanner, a polygon mirror, a MEMS scanner, a phase modulating scanner, a refractive index modulating scanner, and a wavelength modulating scanner.

In the measuring device 100A, a path of the irradiation light 20L2 from the interference optical system 30 to the object 10 and a path of the reflecting light 20L3 from the object 10 to the interference optical system 30 overlap each other. By using such a coaxial optical system, it is possible to simplify the structure of the measuring device 100A and to realize stabilized measurement.

<Output Fiber 42>

The output fiber 42 is one continuous optical fiber, and guides the irradiation light 20L2 coming from the optical circulator 34 and the reflecting light 20L3 coming from the optical element 40. The output fiber 42 is connected to the interference optical system 30, more specifically, to the optical circulator 34, and the optical element 40 is connected to the output fiber 42.

The output fiber 42 includes a connector 42a at one of two end portions thereof that are positioned opposite to each other. The optical element 40 includes a receptacle 40a for connecting the connector 42a of the output fiber 42 thereto. Since the optical element 40 and the output fiber 42 can be attached to and detached from each other, it is possible to easily manufacture and maintain the measuring device 100A. Alternatively, the output fiber 42 may be directly connected to the optical element 40 by using, for example, a joining lens. A type in which the output fiber 42 is connected to the optical element 40 by such a method is called a pigtail type.

<Photodetector 50>

The photodetector 50 detects the interference light 20L4 through the two signal fibers 52 from the second light splitter 32b, and outputs a signal that is based on the intensity of the interference light 20L4. The photodetector 50 includes one or a plurality of photodiodes. The photodiode outputs a signal corresponding to the intensity of the interference light 20L4. The photodetector 50 may include a preamplifier that amplifies the signal.

In the example shown in Fig. 1, the photodetector 50 is a balanced photodiode that includes two ports. Since the photodetector 50 detects a difference between light beams that are input from the two ports, it is possible to reduce common mode noise. Note that instead of being a balanced photodiode, the photodetector 50 may be a photodiode that includes one port.

<Signal Fibers 52>

The two signal fibers 52 equally separate and guide the interference light 20L4 coming from the second light splitter 32b. Each signal fiber 52 is connected to the second light splitter 32b, and the photodetector 50 is connected to the two signal fibers 52. Each of the signal fibers 52 includes a connector 52a at one of two end portions thereof that are positioned opposite to each other. The photodetector 50 includes two receptacles 50a for connecting the connectors 52a of the two signal fibers 52 thereto.

Each signal fiber 52 includes two connectors 52b and a receptacle 52c between the two end portions described above. The receptacle 52c is a component that is positioned between the two connectors 52b and that is provided for connecting the two connectors 52b. The receptacle 52c is attached to the first housing 70a. By using the two connectors 52b and the receptacle 52c, it is possible to attach and detach, of each signal fiber 52, a portion that is connected to the photodetector 50 and a portion that is connected to the second light splitter 32b. As a result, it becomes easy to manufacture and maintain the measuring device 100A. Alternatively, each signal fiber 52 may be directly connected to the photodetector 50 by using, for example, a joining lens. Similarly to the output fiber 42, each signal fiber 52 may be one continuous optical fiber. When the photodetector 50 is a photodiode that includes one port, the number of signal fibers 52 is one.

<Processing Circuit 60>

The processing circuit 60 includes a control circuit 60a, a drive circuit 60b, and a signal processing circuit 60c. The control circuit 60a controls the operations of the drive circuit 60b, the signal processing circuit 60c, and the photodetector 50. In the present description, the operation of each of the control circuit 60a, the drive circuit 60b, and the signal processing circuit 60c may be described as the operation of the processing circuit 60. The drive circuit 60b drives the light source 20. That control circuit 60a may be said to control the operation of the light source 20 through the drive circuit 60b.

The signal processing circuit 60c processes a signal that is output from the photodetector 50 by using the FMCW-LiDAR technology. On the basis of the signal, the processing circuit 60 generates and outputs measurement data regarding the distance of the object 10 and/or measurement data regarding the speed of the object 10. Specifically, the signal processing circuit 60c subjects a time waveform of a detection signal to Fourier transformation to generate data indicating a frequency spectrum, and, on the basis of the data, generates and outputs the measurement data.

The signal processing circuit 60c may input the outputted measurement data into a display (not shown), and the display may display the information regarding the distance and/or the speed of the object 10. Alternatively, the signal processing circuit 60c may input the outputted measurement data to a different type of device, and the different type of device may perform a specific operation on the basis of the measurement data. The different type of device may be, for example, a vehicle or an industrial robot.

Details of the operation of the processing circuit 60 are described later. A computer program that is executed by the control circuit 60a and the signal processing circuit 60c is stored in the memory 62, such as ROM or RAM (Random Access Memory). In this way, the measuring device 100A includes a processing device that includes the processing circuit 60 and the memory 62. The processing circuit 60 and the memory 62 may be integrated on one circuit board, or may be provided on different circuit boards. The control circuit 60a, the drive circuit 60b, and the signal processing circuit 60c included in the processing circuit 60 may be separately provided as a plurality of circuits. The processing device or a part of the processing device may be set at a remote location situated away from other structural components, and the operations of the light source 20 and the photodetector 50 may be controlled through a wired or wireless communication network.

<First Housing 70a and Second Housing 70b>

The first housing 70a accommodates the light source 20 and the interference optical system 30 due to the following reasons. The light source 20 and the first light splitter 32a are connected to each other by an optical fiber. The same applies to the first light splitter 32a and the second light splitter 32b, the first light splitter 32a and the optical circulator 34, and the second light splitter 32b and the optical circulator 34. When an optical fiber that connects two components, for example, breaks and is damaged, light may leak from a damaged portion. As described above, from the viewpoint of stably modulating the frequency of the laser light 20L0, a laser diode that is capable of emitting laser light having a high intensity may be used as the light source 20. When laser light having an intensity exceeding class 1 is emitted from the light source 20, leakage of the laser light from the damaged portion of the optical fiber to the outside of the measuring device 100A is not desirable from the viewpoint of eye safety. Even if laser light having an intensity that satisfies class 1 is always emitted from the light source 20, when light unintentionally leaks to the outside, there is a possibility that measurement data of an object cannot be accurately obtained due to reflecting light that is produced by irradiation of the object with the leaked light.

Here, in the measuring device 100A according to the present embodiment, the intensity of the irradiation light 20L2 that is emitted from the optical element 40 is $I_{out}$, and the intensity of the irradiation light 20L2 that is output from the optical circulator 32a is $I_{rad1}$. A light intensity that is lost due to loss and reflection at the optical element 40 is $L_{ele}$. When the loss in the optical fiber is so small that it can be ignored, $I_{out}$ is expressed as $I_{out} = I_{rad1} - L_{ele}$. Since a portion of a light path of the irradiation light 20L2 that is output from the optical circulator 32a exists outside the first housing 70a, it is desirable that $I_{rad1}$ satisfy class 1. When a maximum light intensity that satisfies class 1 is $I_{limit}$, since $I_{limit} \geq I_{rad1} = I_{out} + L_{ele}$, $I_{out}$ becomes an intensity that satisfies $I_{out} \leq I_{limit} - L_{ele}$. Ordinarily, when $L_{ele}$ is compared with $I_{out}$, $L_{ele}$ is sufficiently (for example, greater than or equal to tens of dB) small, as a result of which it is possible to emit the irradiation light 20L2 having an intensity near the maximum intensity that satisfies class 1 from the optical element 40.

Compared with a structure that does not include the first housing 70a that accommodates the light source 20 and the interference optical system 30, the measuring device 100A according to the first embodiment is capable of reducing the possibility of unintentional leakage of light coming from the inside of the light source 20 and the inside of the interference optical system 30 to the outside of the measuring device 100A. When the first housing 70a accommodates the light source 20 and the interference optical system 30 in a hermetically sealed state without a gap, it is possible to effectively reduce the possibility of unintentional leakage of light to the outside of the measuring device 100A.

The first housing 70a and the second housing 70b each include a corresponding one of a first fiber extending portion 72a and a second fiber extending portion 72b for extending the output fiber 42. The one continuous output fiber 42 is extended to the outside from the first housing 70a and the second housing 70b through the first fiber extending portion 72a and the second fiber extending portion 72b. The first fiber extending portion 72a and the second fiber extending portion 72b have a structure that allows the continuous output fiber 42 to be directly extended from the first housing 70a and the second housing 70b. For the first fiber extending portion 72a and the second fiber extending portion 72b, a connector and a receptacle for making the output fiber 42 attachable and detachable are not used. Therefore, at the output fiber 42, there is almost no reflection of the irradiation light 20L2 when the irradiation light 20L2 is guided. The effects produced due to almost no reflection of the irradiation light 20L2 are described later.

The fiber extending portions 72a and 72b may each be, for example, a rubber bush. When holes are formed in the rubber bushes, and the output fiber 42 is passed through the holes, a gap between the holes of the rubber bushes and a covering portion that is provided on an outer side of the output fiber 42 is provided with elastic force of the rubber. Instead of being rubber bushes, the fiber extending portions 72a and 72b may be, for example, a cover that covers a gap between holes that are formed in the housings 70a and 70b and the covering portion that is provided on the outer side of the output fiber passed through the holes.

The optical element 40 is connected to the output fiber 42 extended from the housings 70a and 70b through the fiber extending portions 72a and 72b. Therefore, the optical element 40 is disposed on an outer side of the second housing 70b. Due to such a structure, in accordance with the position of the object 10, the direction of the irradiation light 20L2 that is emitted from the optical element 40 can be easily adjusted independently of a setting direction of the measuring device 100A.

The first housing 70a includes a wire extending portion 74 for extending a wire that transmits a signal from the drive circuit 60b to the light source 20. The drive circuit 60b and the light source 20 are electrically connected to each other by the wire. The wire extending portion 74 may be, for example, an electrical connector. By forming a hole in the first housing 70a and providing a cover that covers a gap between the hole and the electrical connector, it is possible to reduce the possibility of leakage of unintended light.

Therefore, the first housing 70a is capable of accommodating the light source 20 and the interference optical system 30 in a hermetically sealed state without a gap. Further, the first housing 70a and the second housing 70b allow the irradiation light 20L2 to be taken out to the outside through the output fiber 42. In this way, it is possible to intercept leakage light from the light source 20 and the interference optical system 30 and to take out the irradiation light 20L2 to the outside. Since the output fiber 42 is an optical fiber directly extended from the first housing 70a and the second housing 70b, the irradiation light 20L2 is guided almost without being reflected in the output fiber 42.

The photodetector 50 and the processing circuit 60 are disposed on an outer side of the first housing 70a and on an inner side of the second housing 70b. The photodetector 50 may include components, such as a photodiode and a preamplifier, whose heating amount is not so large. In contrast, the processing circuit 60 may include a logic element, such as a CPU or a FPGA, whose heating amount is relatively large.

Unlike in the measuring device 100A according to the first embodiment, in a structure in which the processing circuit 60 is accommodated in a hermetically sealed state by the first housing 70a, heat emitted from the processing circuit 60 cannot be effectively discharged to the outside, and the operation of the processing circuit 60 may become unstable. Further, when the internal temperature of the first housing 70a increases, the length of the optical fiber in the first housing 70a varies on the order of micrometers. As a result, depending upon a distance resolution and a distance range, in which measurement of the distance of the object 10 and/or measurement of the speed of the object 10 can be performed, an error may occur in measurement data of the object 10.

In contrast, in the measuring device 100A according to the first embodiment, since the processing circuit 60 is disposed on the outer side of the first housing 70a, heat that is emitted from the processing circuit 60 during its operation can be effectively discharged to the outside through the second housing 70b. The second housing 70b may include a heat-dissipating ventilation hole or fan. Since heat that is emitted from the processing circuit 60 can be effectively discharged to the outside, it is possible to more stably operate the processing circuit 60 and to accurately obtain measurement data of the object 10 by suppressing variations in the length of the optical fiber in the first housing 70a. Further, since the photodetector 50 and the processing circuit 60 are disposed on the outer side of the first housing 70a, it is possible to easily maintain the photodetector 50 and the processing circuit 60.

[FMCW-LiDAR technology]

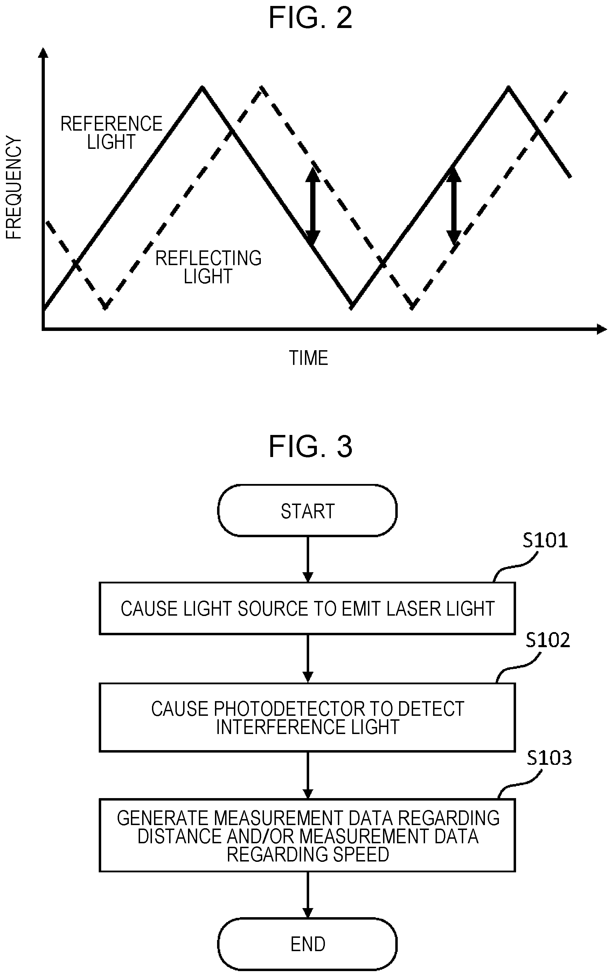

Next, the FMCW-LiDAR technology is simply described with reference to Fig. 2. Details of the FMCW-LiDAR technology are disclosed in, for example, NPL 1.

Fig. 2 is a diagram schematically showing, when the object 10 is stationary, changes of the frequency of the reference light 20L1 and the frequency of the reflecting light 20L3 with time. A solid line indicates the reference light 20L1, and a broken line indicates the reflecting light 20L3. The frequency of the reference light 20L1 shown in Fig. 2 repeats changes with time in a triangular waveform. That is, the frequency of the reference light 20L1 repeats an up-chirp and a down-chirp. An amount of increase of the frequency in an up-chirp period and an amount of decrease of the frequency in a down-chirp period are equal to each other. Compared with the frequency of the reference light 20L1, the frequency of the reflecting light 20L3 is shifted in a positive direction along a time axis. An amount of shift of the time of the reflecting light 20L3 is equal to the time taken for the irradiation light 20L2 to be emitted to the outside from the measuring device 100A, to be reflected by the object 10, and to return as the reflecting light 20L3. As a result, the interference light 20L4, in which the reference light 20L1 and the reflecting light 20L3 have been caused to interfere with each other by being superposed upon each other, has a frequency equivalent to the frequency difference between the frequency of the reflecting light 20L3 and the frequency of the reference light 20L1. Double-headed arrows shown in Fig. 2 indicate the frequency difference between the frequency of the reflecting light 20L3 and the frequency of the reference light 20L1. The photodetector 50 outputs a signal indicating the intensity of the interference light 20L4. The signal is called a beat signal. The frequency of the beat signal, that is, the beat frequency is equal to the frequency difference above. The processing circuit 60 is capable of generating measurement data regarding the distance of the object 10 and/or measurement data regarding the speed of the object 10.

When the object 10 is stationary, the beat frequency in the up-chirp period and the beat frequency in the down-chirp period are equal to each other. When an amount of increase of the frequency of light in the up-chirp period or the down-chirp period is $\Delta f$, the time required for a change of $\Delta f$ is $\Delta t$, the speed of light is c, and a difference between the light path length of the reference light 20L 1 and the total of the light path length of the irradiation light 20L2 and the light path length of the reflecting light 20L3 is 2d, a beat frequency $f_{beat}$ in the up-chirp period or the down-chirp period is expressed by the following Formula (1):

[Formula 1]

$$f_{beat} = \frac{2\Delta f}{c\Delta t}d \qquad (1)$$

The beat frequency $f_{beat}$ in Formula (1) is obtained by multiplying to a frequency time change rate $\Delta f/\Delta t$ a time (2d/c) taken for the irradiation light 20L2 to be emitted to the outside from the measuring device 100A, to be reflected by the object 10, and to return as the reflecting light 20L3.

When the object 10 moves, compared with the frequency of the reference light 20L1, the frequency of the reflecting light 20L3 is Doppler-shifted in the positive direction or the negative direction along a frequency axis. In this case, the beat frequency in the up-chirp period and the beat frequency in the down-chirp period differ from each other. The processing circuit 60 is capable of generating measurement data regarding the speed of the object 10 and measurement data regarding the distance of the object 10 from the frequency difference between and the average of the beat frequencies.

[Measurement Operation Executed by Processing Circuit 60]

Next, with reference to Fig. 3, an example of a measurement operation that is executed by the processing circuit 60 in the first embodiment is described. Fig. 3 is a flow chart schematically showing the example of the measurement operation that is executed by the processing circuit 60. The processing circuit 60 executes operations from Step S101 to Step S103 shown in Fig. 3.

<Step S101>

The processing circuit 60 causes the light source 20 to emit the laser light 20L0 whose frequency changes with time. Specifically, the control circuit 60a causes the drive circuit 60b to drive the light source 20 and causes the light source 20 to emit the laser light 20L0 whose frequency changes with time.

<Step S102>

The processing circuit 60 causes the photodetector 50 to detect the interference light 20L4. The photodetector 50 outputs a signal corresponding to the intensity of the interference light 20L4. Specifically, the control circuit 60a causes the photodetector 50 to detect the interference light 20L4.

<Step S103>

On the basis of the signal that has been output from the photodetector 50, the processing circuit 60 generates measurement data regarding the distance of the object 10 and/or measurement data regarding the speed of the object 10. Specifically, on the basis of the signal that has been output from the photodetector 50, the control circuit 60a causes the signal processing circuit 60c to generate measurement data.

By performing the above-described operations of the processing circuit 60, it is possible to measure the distance of the object 10 and/or the speed of the object 10.

[Flows of Light Beams in Measuring Device 100A]

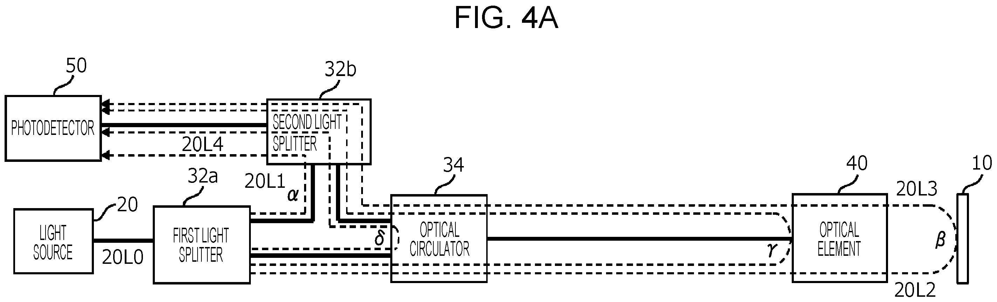

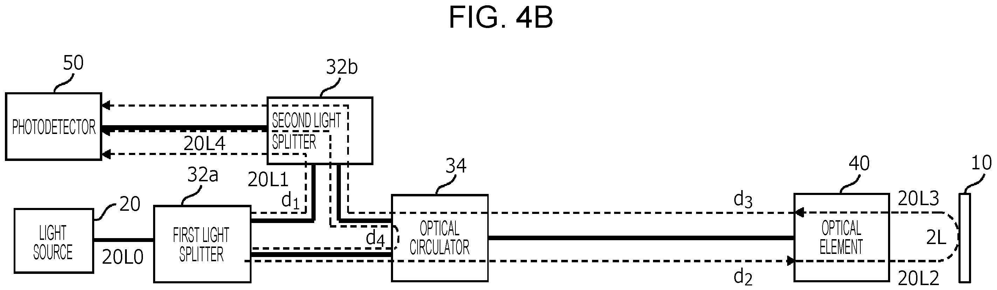

Next, with reference to Figs. 4A and 4B, flows of a plurality of light beams that are produced in the measuring device 100A shown in Fig. 1 and light path lengths thereof are described. Fig. 4A is a diagram for illustrating the flows of the plurality of light beams that are produced in the measuring device 100A shown in Fig. 1. In Fig. 4A, for simplification, the signal fibers 52 that connect the second light splitter 32b and the photodetector 50 to each other are shown as one optical fiber. Even in the other figures, the optical fibers that connect the second light splitter 32b and the photodetector 50 to each other may be shown as one optical fiber. Arrowed broken lines shown in Fig. 4A indicate the flows of the light beams. As shown in Fig. 4A, a flow $\alpha$ to a flow $\delta$ of the plurality of light beams are produced in the measuring device 100A.

The flow $\alpha$ of the light beam is a flow of the reference light 20L1 from the first light splitter 32a to the photodetector 50. The flow $\beta$ of the light beam is a flow of the irradiation light 20L2 from the first light splitter 32a to the object 10 and of the reflecting light 20L3 from the object 10 to the photodetector 50.

On the other hand, the flows $\gamma$ and $\delta$ of the light beams cause noise to be produced in a detection signal. The flow $\gamma$ of the light beam is a flow of a part of the irradiation light 20L2 from the first light splitter 32a that is reflected by the optical element 40 and that reaches the photodetector 50. Such a reflection occurs at the receptacle 40a of the optical element 40 shown in Fig. 1. The flow $\delta$ of the light beam is a flow of another part of the irradiation light 20L2 from the first light splitter 32a that reaches the photodetector 50 through a noise light path in the optical circulator 34. The noise light path is considered as a path that passes the optical circulator 34, more specifically, a path in which leakage light of the irradiation light 20L2 traveling toward the optical element 40 in the optical circulator 34 propagates while being multiply-scattered in the optical circulator 34.

As described above, since a part of the irradiation light 20L2 is reflected by the optical element 40 and another part is multiply-scattered in the optical circulator 34, what is actually emitted from the optical element 40 to the outside is the remaining part of the irradiation light 20L2. However, in the present description, as long as there is no misunderstanding, the expression "the optical element 40 emits the irradiation light 20L2 to the outside" will be used.

Fig. 4B is a diagram for illustrating light path lengths of the flows $\alpha$ to $\delta$ of the plurality of light beams that are produced in the measuring device 100A shown in Fig. 1. A first light path length of a first path from the first light splitter 32a to the photodetector 50 is $d_1$. A second light path length of a second path from the first light splitter 32a to the optical element 40 is $d_2$. A third light path length of a third path from the optical element 40 to the photodetector 50 is $d_3$. A light path length of a fourth path from the first light splitter 32a to the photodetector 50 through the inside of the interference optical system 30, more specifically, the noise light path in the optical circulator 34 is a fourth light path length $d_4$. A round-trip distance between the optical element 40 and the object 10 is 2L. A distance L is a distance from the receptacle 40a of the optical element 40 shown in Fig. 1 to a location where the object 10 is irradiated with the irradiation light 20L2. Therefore, when the object 10 contacts the optical element 40, the distance L is equivalent to the length of the optical element 40. A light path length of the flow $\alpha$ of the light beam is $d_1$, a light path length of the flow $\beta$ of the light beam is $d_2 + d_3 + 2L$, a light path length of the flow $\gamma$ of the light beam is $d_2 + d_3$, and a light path length of the flow $\delta$ of the light beam is $d_4$.

The frequency of a beat signal resulting from the reflecting light 20L3 that is reflected by the object 10 is expressed by the following Formula (2). $|d_2 + d_3 + 2L - d_1|$ in Formula (2) is a light path length difference between the flow $\beta$ of the light beam and the flow $\alpha$ of the light beam.

[Formula 2]

$$f_{obj} = \frac{2\Delta f}{c\Delta t}\left|d_2 + d_3 + 2L - d_1\right| \qquad (2)$$

Of the irradiation light 20L2, a frequency $f_{opt}$ of a beat signal resulting from light that is reflected by the optical element 40 is expressed by the following Formula (3). $|d_2 + d_3 - d_1|$ in Formula (3) is a light path length difference between the flow $\gamma$ of the light beam and the flow $\alpha$ of the light beam.

[Formula 3]

$$f_{opt} = \frac{2\Delta f}{c\Delta t}|d_2 + d_3 - d_1| \qquad (3)$$

A frequency $f_{cir}$ of a beat signal resulting from multiply-scattered light that is produced in the optical circulator 34 is expressed by the following Formula (4). $|d_4 - d_1|$ in Formula (4) is a light path length difference between the flow $\delta$ of the light beam and the flow $\alpha$ of the light beam.

[Formula 4]

$$f_{cir} = \frac{2\Delta f}{c\Delta t}|d_4 - d_1| \qquad (4)$$

The effects of the light path lengths of the paths of the flows $\alpha$ to $\delta$ of the light beams in the measuring device 100A on the distance range, in which measurement of the distance of the object 10 and/or measurement of the speed of the object 10 can be performed, are described in detail in Japanese Application No. 2022-010910 (application date: January 27, 2022). The disclosed contents of Japanese Application No. 2022-010910 are incorporated in the present description by reference in their entirety.

[Comparative Example]

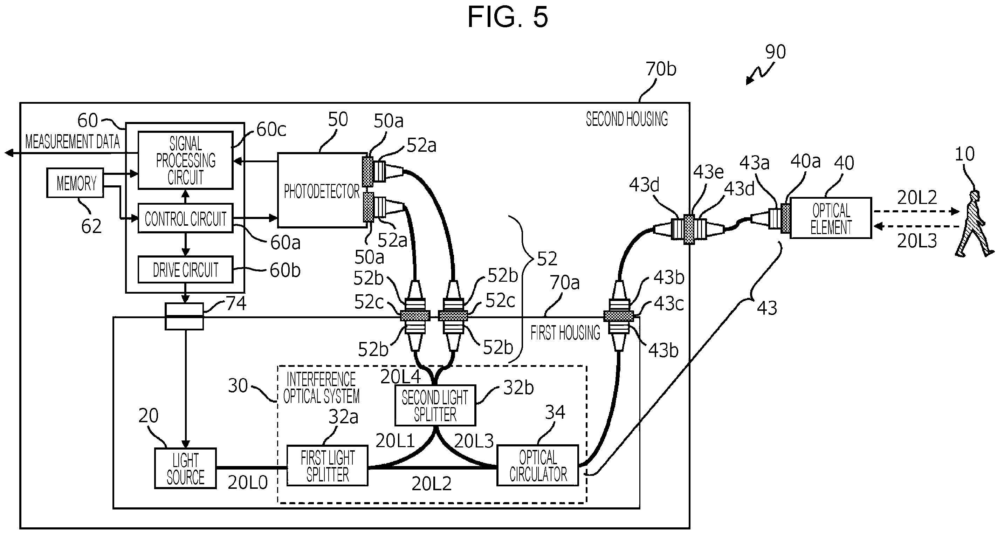

Here, with reference to Fig. 5 to Fig. 6B, problems that occur when, instead of using the output fiber 42 that is directly extended from the first housing 70a and the second housing 70b, an output fiber that includes a connector and a receptacle between two end portions that are positioned opposite to each other is used are described by using a measuring device according to a comparative example.

Fig. 5 is a block diagram schematically showing a structure of the measuring device according to the comparative example. A measuring device 90 shown in Fig. 5 differs from the measuring device 100A shown in Fig. 1 in that the measuring device 90 includes an output fiber 43 shown in Fig. 5 instead of the output fiber 42 shown in Fig. 1. The output fiber 43 includes a first connector 43a on one of two end portions that are positioned opposite to each other. The first connector 43a is connected to a receptacle 40a of an optical element 40. The output fiber 43 further includes two second connectors 43b and a first receptacle 43c between the two end portions described above. The first receptacle 43c is a component that is positioned between the two second connectors 43b and that is provided for connecting the two second connectors 43b. The first receptacle 43c is attached to the first housing 70a. The output fiber 43 further includes two third connectors 43d and a second receptacle 43e between the two end portions described above. The second receptacle 43e is a component that is positioned between the two third connectors 43d and that is provided for connecting the two third connectors 43d. The second receptacle 43e is attached to the second housing 70b.

Since, of the output fiber 43, a portion that is connected to the optical element 40, a portion that is connected to an optical circulator 34, and a portion that is positioned between these two portions can be attached and detached, it is possible to easily manufacture and maintain the measuring device 90. On the other hand, since the output fiber 43 is not an optical fiber that is directly extended from the first housing 70a and the second housing 70b, when the irradiation light 20L2 is guided, the irradiation light 20L2 is reflected by the first receptacle 43c and the second receptacle 43e.

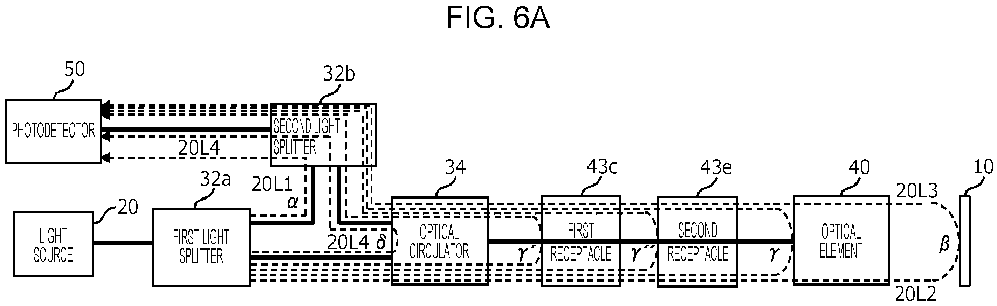

Fig. 6A is a diagram for illustrating flows of a plurality of light beams that are produced in the measuring device 90 shown in Fig. 5. As shown in Fig. 6A, in the measuring device 90, in addition to a flow $\alpha$ to a flow $\delta$ of the light beams, a flow $\gamma'$ and a flow $\gamma''$ of the light beams that cause noise to be produced in a detection signal are also produced. That the flows $\gamma$ and $\delta$ of the light beams result from a part of and another part of the irradiation light 20L2 is as described above. The flow $\gamma'$ of the light beam is a flow of still another part of the irradiation light 20L2 from a first light splitter 32a that is reflected by the first receptacle 43c and that reaches a photodetector 50. The flow $\gamma''$ of the light beam is a flow of still another part of the irradiation light 20L2 from the first light splitter 32a that is reflected by the second receptacle 43e and that reaches the photodetector 50.

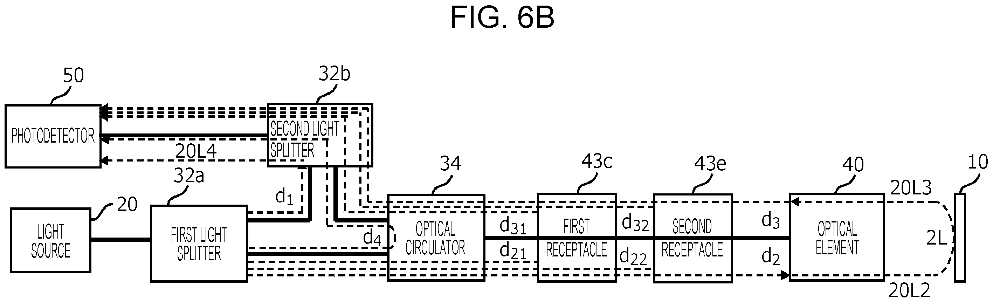

Fig. 6B is a diagram for illustrating light path lengths of the flows of the plurality of light beams that are produced in the measuring device 90 shown in Fig. 5. A fifth light path length of a fifth path from the first light splitter 32a to the first receptacle 43c is $d_{21}$. A sixth light path length of a sixth path from the first receptacle 43c to the photodetector 50 is $d_{31}$. A seventh light path length of a seventh path from the first light splitter 32a to the second receptacle 43e is $d_{22}$. An eighth light path length of an eighth path from the second receptacle 43e to the photodetector 50 is $d_{32}$. A light path length of the flow $\gamma'$ of the light beam is $d_{21} + d_{31}$, and a light path length of the flow $\gamma''$ of the light beam is $d_{22} + d32$.

Of the irradiation light 20L2, a frequency $f_{r1}$ of a beat signal resulting from light that is reflected by the first receptacle 43c is expressed by the following Formula (5). $|d_{21} + d_{31} - d_1|$ in Formula (5) is a light path length difference between the flow $\gamma'$ of the light beam and the flow $\alpha$ of the light beam.
[Formula 5]

$$f_{r1} = \frac{2\Delta f}{c\Delta t}|d_{21} + d_{31} - d_1| \qquad (5)$$

Of the irradiation light 20L2, a frequency $f_{r2}$ of a beat signal resulting from light that is reflected by the second receptacle 43e is expressed by the following Formula (6). $|d_{22} + d_{32} - d_1|$ in Formula (6) is a light path length difference between the flow $\gamma''$ of the light beam and the flow $\alpha$ of the light beam.
[Formula 6]

$$f_{r2} = \frac{2\Delta f}{c\Delta t}|d_{22} + d_{32} - d_1| \qquad (6)$$

In the measuring device 90 according to the comparative example, the first housing 70a is capable of accommodating the light source 20 and the interference optical system 30 in a hermetically sealed state without a gap. Further, the first housing 70a and the second housing 70b allow the irradiation light 20L2 to be taken out to the outside through the output fiber 43. In this way, it is possible to intercept leakage light coming from the light source 20 and the interference optical system 30 and to take out the irradiation light 20L2 to the outside. On the other hand, since the output fiber 43 is not an optical fiber directly extended from the first housing 70a and the second housing 70b, and includes the connectors 43b and 43d and the receptacles 43c and 43e, when the irradiation light 20L2 is guided, parts of the irradiation light 20L2 may be reflected by the receptacles 43c and 43e.

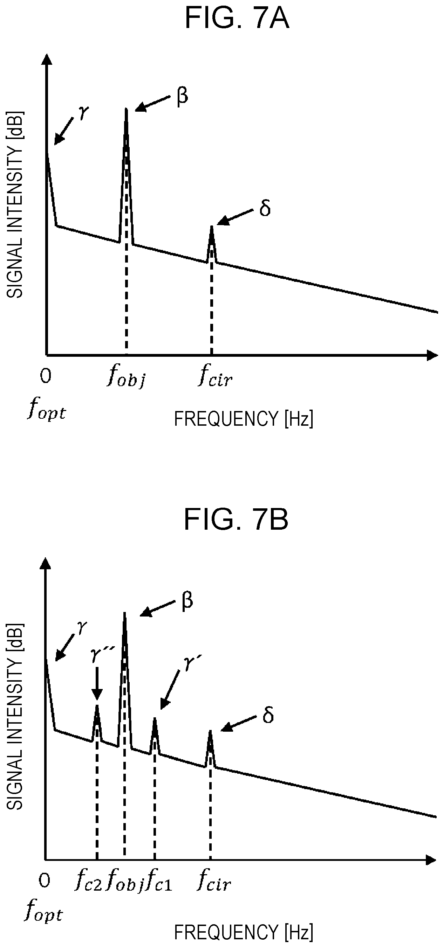

Next, with reference to Figs. 7A and 7B, an example of a spectrum of a detection signal in the first embodiment and an example of a spectrum of a detection signal in the comparative example are described. Fig. 7A is a diagram schematically showing the example of the spectrum of the detection signal in the first embodiment, and Fig. 7B is a diagram schematically showing the example of the spectrum of the detection signal in the comparative example. The vertical axis represents the intensity of the detection signal, and the horizontal axis represents the frequency. The frequency is greater than or equal to zero, and corresponds to the distance from the optical element 40 to the object 10. In the examples shown in Figs. 7A and 7B, the total of the second light path length $d_2$ and the third light path length $d_3$ is equal to the first light path length $d_1$. That is, $d_2 + d_3 = d_1$, and, from Formula (3), $f_{opt} = 0$ Hz. It is possible to, with the receptacle 40a of the optical element 40 shown in Fig. 1 being defined as 0 m, measure the distance from the optical element 40 to the object 10. Even if the object 10 contacts the optical element 40, since the distance from the optical element 40 to the object 10 is equivalent to the length of the optical element 40, peaks $\beta$ and $\gamma$ will not overlap each other.

When $f_{opt} \neq 0$ Hz, a frequency range in which the frequency is lower than $f_{opt}$ is not used as a frequency range corresponding to the distance range in which measurement of the distance of the object 10 and/or measurement of the speed of the object 10 can be performed. In contrast, when $f_{opt} = 0$ Hz, since such a frequency range that is not used does not exist, it is possible to maximally widen the distance range in which measurement of the distance of the object 10 and/or measurement of the speed of the object 10 can be performed.

In the example shown in Fig. 7A, in the spectrum of the detection signal, the peaks $\beta$ and $\gamma$ resulting from the flows $\beta$ and $\gamma$ of the light beams and a peak $\delta$ resulting from the flow $\delta$ of the light beam appear. A peak frequency of the peak $\beta$ is $f_{obj}$, a peak frequency of the peak $\gamma$ is $f_{opt}$, and a peak frequency of the peak $\delta$ is $f_{cir}$. Due to differences among the light path lengths of the flows $\beta$ to $\delta$ of the light beams, the frequencies $f_{obj}$, $f_{opt}$, and $f_{cir}$ differ from each other. The peaks $\gamma$ and $\delta$ are noise. When the frequency $f_{obj}$ is not near the frequency $f_{cir}$, it is possible to accurately obtain measurement data of the object 10. That is, frequency ranges other than the frequency range near the frequency $f_{cir}$ correspond to the distance range in which measurement of the distance of the object 10 and/or measurement of the speed of the object 10 can be performed. The frequency range near the frequency $f_{cir}$ may differ depending upon in what environment measurement of the distance of the object 10 and/or measurement of the speed of the object 10 are to be performed. The frequency range near the frequency $f_{cir}$ corresponds to, for example, a distance range within 1 m, 10cm, or 1 cm from a distance corresponding to the frequency $f_{cir}$.

In contrast, in the example shown in Fig. 7B, in the spectrum of the detection signal, not only the peaks $\beta$, $\gamma$, and $\delta$, but also peaks $\gamma'$ and $\gamma''$ resulting from the respective flows $\gamma'$ and $\gamma''$ of the light beams appear. A peak frequency of the peak $\gamma'$

is $f_{r1}$, and a peak frequency of the peak $\gamma''$ is $f_{r2}$. Due to differences among the light path lengths of the flows $\beta$, $\gamma$, $\gamma'$, and $\gamma''$, and $\delta$ of the light beams, the frequencies $f_{obj}$, $f_{opt}$, $f_{r1}$, $f_{r2}$, and $f_{cir}$ differ from each other. In the example shown in Fig. 7B, $f_{r2} < f_{r1}$, and $f_{r1} < f_{cir}$. The peaks $\gamma$ and $\gamma''$ are noise. Even if the frequency $f_{obj}$ is not near the frequency $f_{cir}$, when the frequency $f_{obj}$ is near the frequency $f_{r1}$ or $f_{r2}$, it no longer becomes easy to accurately obtain measurement data of the object 10. In the example shown in Fig. 7B, the frequency $f_{obj}$ may overlap the frequency $f_{r1}$ or $f_{r2}$. In this way, the peaks $\gamma$ and $\gamma''$ narrow the distance range in which measurement of the distance of the object 10 and/or measurement of the speed of the object 10 can be performed.

Although, in the example above, $d_2 + d_3 = d_1$, even if $d_2 + d_3 \neq d_1$, an argument similar to the argument above holds. However, the frequencies $f_{obj}$, $f_{opt}$, $f_{r1}$, $f_{r2}$, and $f_{cir}$ may change. When the condition of Formula (7) below is satisfied and the output fiber 43 in the comparative example is used, as in the example shown in Fig. 7B, the frequencies $f_{obj}$, $f_{r1}$, $f_{r2}$, and $f_{cir}$ appear on a frequency side that is higher than the frequency $f_{opt}$. Therefore, the frequency $f_{obj}$ may overlap the frequency $f_{r1}$ or $f_{r2}$.

[Formula 7]

$$|d_2 + d_3 - d_1| \leq |d_4 - d_1| \qquad (7)$$

When the condition of Formula (7) is satisfied and the output fiber 42 in the first embodiment is used, as in the example shown in Fig. 7A, as long as the frequency $f_{obj}$ is not near the frequency $f_{cir}$, it is possible to accurately obtain measurement data of the object 10 without narrowing the distance range in which measurement of the distance of the object 10 and/or measurement of the speed of the object 10 can be performed. Note that in the measuring device 100A according to the first embodiment, the condition of Formula (7) need not be satisfied.

From the above, in the measuring device 100A according to the first embodiment, it is possible to obtain the following Effects (1) to (3).

(1) It is possible to reduce the possibility of unintentional leakage of light to the outside by accommodating the light source 20 and the interference optical system 30 by using the first housing 70a.

(2) It is possible to, by disposing the processing circuit 60 on the outer side of the first housing 70a and on the inner side of the second housing 70b, effectively discharge to the outside heat that is emitted from the processing circuit 60. As a result, it is possible to more stably operate the processing circuit 60 and to accurately obtain measurement data of the object 10 by suppressing variations in the length of the optical fiber in the first housing 70a.

(3) It is possible to reduce noise in the spectrum of a detection signal by using the output fiber 42 directly extended from the first housing 70a and the second housing 70b. As a result, it is possible to accurately obtain measurement data of the object 10 without narrowing the distance range in which measurement of the distance of the object 10 and/or measurement of the speed of the object 10 can be performed.

Accommodation of the light source 20 and the interference optical system 30 in the first housing 70a for the purpose of reducing the possibility of unintentional leakage of light to the outside is not described in PTL 1, PTL 2, and NPL 1. Similarly, the disposition of the processing circuit 60 on the outer side of the first housing 70a and on the inner side of the second housing 70b, and the use of the output fiber 42 directly extended from the first housing 70a and the second housing 70b are not described in PTL 1, PTL 2, and NPL 1 either.

Note that when the processing circuit 60 does not produce much heat, of Effects (1) to (3), Effect (2) need not be regarded as important. In this case, the processing circuit 60 may be disposed on the inner side of the first housing 70a. Further, when, in the output fiber 43 that includes the connectors 43b and 43d and the receptacles 43c and 43e, the light amount of the irradiation light 20L2 that is reflected by the receptacles 43c and 43e is not so large, of Effects (1) to (3), Effect (3) need not be regarded as important. In this case, instead of using the output fiber 42 directly extended from the first housing 70a and the second housing 70b, the output fiber 43 that includes the connectors 43b and 43d and the receptacles 43c and 43e may be used.

(Second Embodiment)

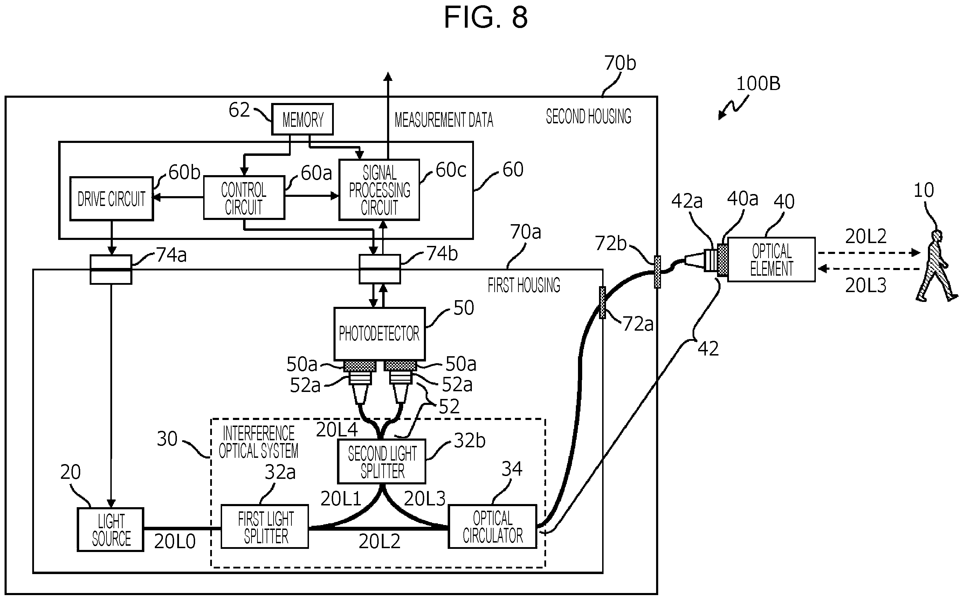

Next, with reference to Fig. 8, an example of a structure of a measuring device according to a second embodiment of the present disclosure is described while focusing on its differences from the measuring device according to the first embodiment. Fig. 8 is a block diagram schematically showing the structure of the measuring device according to the exemplary second embodiment of the present disclosure. A measuring device 100B shown in Fig. 8 differs from the measuring device 100A shown in Fig. 1 on the following two points. The first point is that a first housing 70a accommodates not only a light source 20 and an interference optical system 30 but also a photodetector 50. The second point is that the first housing 70a includes not only the first wire extending portion 74a but also a second wire extending portion 74b. The first wire extending portion 74a is a portion for extending a wire that transmits a signal from a drive circuit 60b to the light source 20. The second wire extending portion 74b is a portion for extending a wire that transmits a signal from a control circuit 60a to the photodetector 50 and for extending a wire that transmits a signal from the photodetector 50 to a signal processing circuit 60c. The first wire extending portion 74a and the second wire extending portion 74b may be, for example, electrical connectors described above.

The photodetector 50 may include, for example, components, such as a photodiode and a preamplifier. The heating amounts of these components are not so large. Therefore, even if the photodetector 50 is disposed in the first housing 70a, problems such as the operation of the photodetector 50 becoming unstable and errors occurring in measurement data of the object 10 due to variations in the length of the optical fiber in the first housing 70a do not occur.

In the measuring device 100B according to the second embodiment, as in the measuring device 100A according to the first embodiment, it is possible to obtain Effects (1) to (3) described above. Further, in the measuring device 100B according to the second embodiment, unlike in the measuring device 100A according to the first embodiment, a signal fiber 52 need not include two connectors 52b and a receptacle 52c. Therefore, it is possible to simplify the structural components of the measuring device 100B and to keep component costs low.

(Third Embodiment)

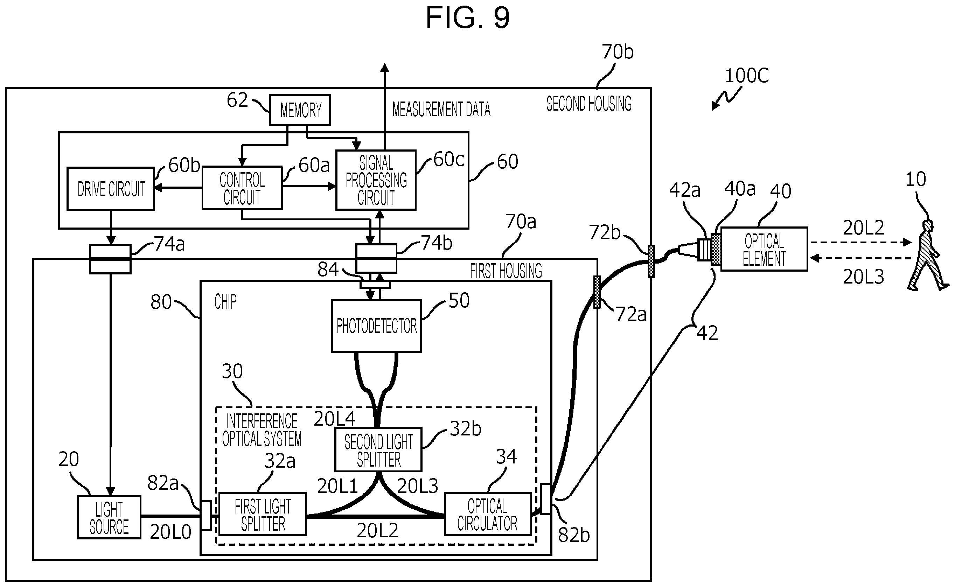

Next, with reference to Fig. 9, an example of a structure of a measuring device according to a third embodiment of the present disclosure is described while focusing on its differences from the measuring device according to the second embodiment. Fig. 9 is a block diagram schematically showing the structure of the measuring device according to the exemplary third embodiment of the present disclosure. A measuring device 100C shown in Fig. 9 differs from the measuring device 100B shown in Fig. 8 in that the measuring device 100C further includes a chip 80 that supports an interference optical system 30 and a photodetector 50. That is, the interference optical system 30 and the photodetector 50 are formed in an on-chip state. At the chip 80, instead of an optical fiber that connects components, an optical waveguide is used. Thick lines in the chip 80 shown in Fig. 9 indicate the optical waveguide.

The chip 80 includes a first light coupling portion 82a, a second light coupling portion 82b, and a signal electrode 84. The first light coupling portion 82a inputs laser light 20L0 emitted from a light source 20 into a first light splitter 32a. The second light coupling portion 82b inputs irradiation light 20L2 coming from an optical circulator 34 into an optical element 40 through an output fiber 42, and inputs reflecting light 20L3 coming from the optical element 40 into the optical circulator 34 through the output fiber 42. The first light coupling portion 82a and the second light coupling portion 82b may each be, for example, an end surface of the optical waveguide or a grating coupler. The signal electrode 84 inputs into the photodetector 50 a signal that has been output from a control circuit 60a, and inputs into a signal processing circuit 60c a signal that has been output from the photodetector 50.

In the measuring device 100C according to the third embodiment, as in the measuring device 100A according to the first embodiment, it is possible to obtain Effects (1) to (3) described above. Further, in the measuring device 100C according to the third embodiment, unlike in the measuring device 100B according to the second embodiment, it is possible to reduce the size of the measuring device 100C by forming the interference optical system 30 and the photodetector 50 in an on-chip state.

(Fourth Embodiment)

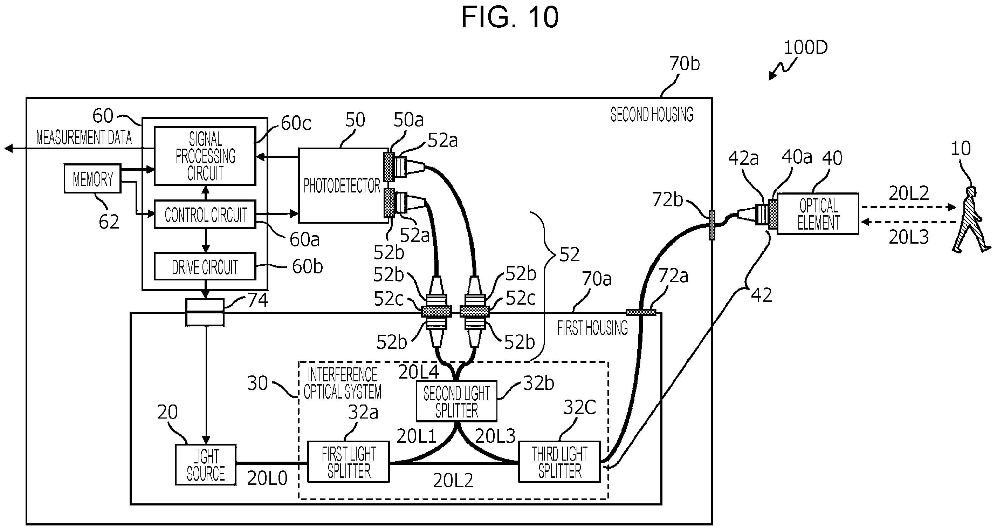

Next, with reference to Fig. 10, an example of a structure of a measuring device according to a fourth embodiment of the present disclosure is described while focusing on its differences from the measuring device according to the first embodiment. Fig. 10 is a block diagram schematically showing the structure of the measuring device according to the exemplary fourth embodiment of the present disclosure. A measuring device 100D shown in Fig. 10 differs from the measuring device 100A shown in Fig. 1 in that the measuring device 100D includes a third light splitter 32c shown in Fig. 10 instead of the optical circulator 34 shown in Fig. 1.

The intensity of reflecting light 20L3 that is input into a second light splitter 32b by the third light splitter 32c is lower than the intensity of the reflecting light 20L3 that is input into the second light splitter 32b by the optical circulator 34. When a branching ratio of the third light splitter 32c is 50:50, the intensity of the reflecting light 20L3 that is output from the third light splitter 32c is half of the intensity of the reflecting light 20L3 that is input into the third light splitter 32c. Therefore, the intensity of a beat signal resulting from an object 10 is reduced. On the other hand, since the third light splitter 32c is less costly than the optical circulator 34, it is possible to keep component costs low.

When the third light splitter 32c is used instead of the optical circulator 34, a part of the reflecting light 20L3 may return to a light source 20 through a first light splitter 32a. Such returning light may be removed by providing an optical isolator between the light source 20 and the first light splitter 32a.

In the measuring device 100D according to the fourth embodiment, as in the measuring device 100A according to the first embodiment, it is possible to obtain Effects (1) to (3) described above. Further, in the measuring device 100D according to the fourth embodiment, since the third light splitter 32c is used instead of the optical circulator 34, it is possible to keep component costs low.

(Fifth Embodiment)

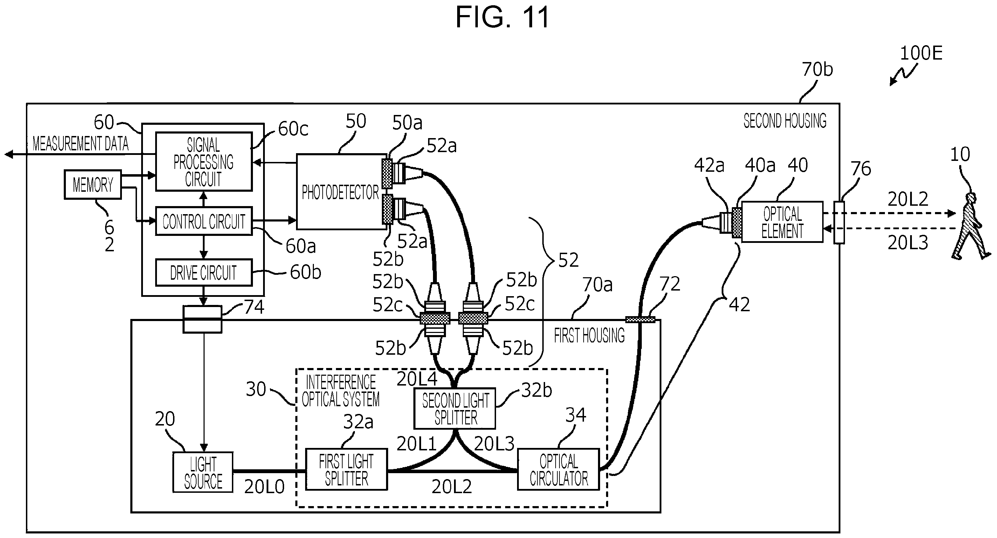

Next, with reference to Fig. 11, an example of a structure of a measuring device according to a fifth embodiment of the present disclosure is described while focusing on its differences from the measuring device according to the first embodiment. Fig. 11 is a block diagram schematically showing the structure of the measuring device according to the exemplary fifth embodiment of the present disclosure. A measuring device 100E shown in Fig. 11 differs from the measuring device 100A shown in Fig. 1 on the following two points. The first point is that an optical element 40 is disposed on an outer side of a first housing 70a and on an inner side of a second housing 70b. The second point is that the second housing 70b includes a light transmissive window 76 that transmits irradiation light 20L2 that is emitted from the optical element 40 and reflecting light 20L3 that is reflected by an object 10. The light transmissive window 76 may be an optical substrate that is light transmissive with respect to the irradiation light 20L2 and the reflecting light 20L3, or may be an opening. The optical substrate may have a light transmissivity of, for example, greater than or equal to 60%, more desirably, greater than or equal to 80% with respect to the irradiation light 20L2 and the reflecting light 20L3.
In the measuring device 100E, a portion where an output fiber 42 is extended is only a fiber extending portion 72 of the first housing 70a. The structure of the fiber extending portion 72 is the same as the structure of the first fiber extending portion 72a shown in Fig. 1. In the measuring device 100E, compared with the measuring device 100A, it is possible to shorten the output fiber 42. When the irradiation light 20L2 is guided from the output fiber 42, due to a defect in the fiber, the irradiation light 20L2 may be unintentionally slightly reflected. As a result, noise may occur in a spectrum of a detection signal. The longer the output fiber 42 is, the wider a frequency band in which noise may occur tends to be. In the measuring device 100E, since it is possible to shorten the output fiber 42, it is possible to reduce the possibility of noise occurring in the spectrum of the detection signal.
In the measuring device 100E according to the fifth embodiment, as in the measuring device 100A according to the first embodiment, it is possible to obtain Effects (1) to (3) described above. However, Effect (3) is obtained by the output fiber 42 that is directly extended from the first housing 70a but is not extended from the second housing 70b. Further, in the measuring device 100E according to the fifth embodiment, unlike in the measuring device 100A according to the first embodiment, the second fiber extending portion 72b is not required. Therefore, it is possible to simplify the structural components of the measuring device 100E and to keep component costs low. Further, since the output fiber 42 is short, it is possible to reduce the possibility of noise occurring in the spectrum of the detection signal.

(Sixth Embodiment)

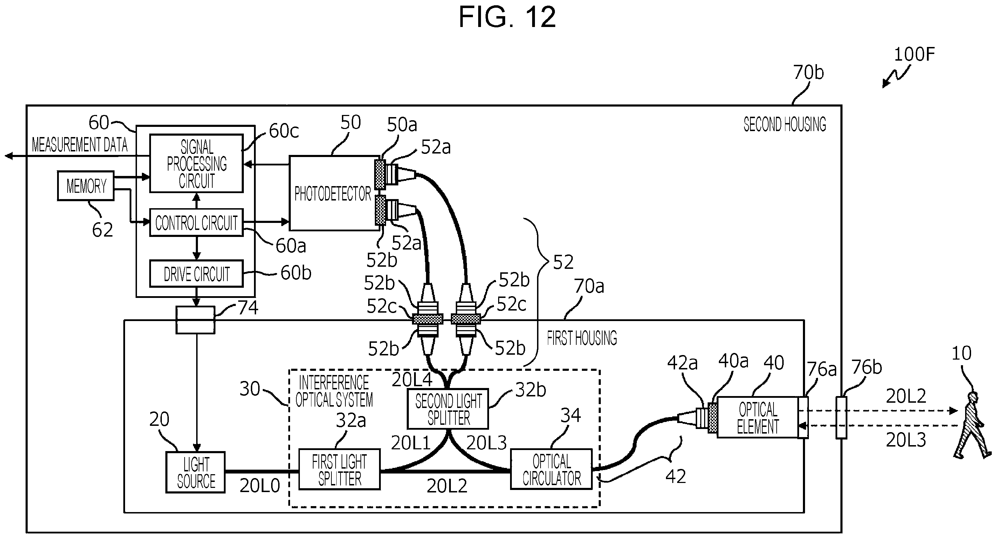

Next, with reference to Fig. 12, an example of a structure of a measuring device according to a sixth embodiment of the present disclosure is described while focusing on its differences from the measuring device according to the first embodiment. Fig. 12 is a block diagram schematically showing the structure of the measuring device according to the exemplary sixth embodiment of the present disclosure. A measuring device 100F shown in Fig. 12 differs from the measuring device 100A shown in Fig. 1 on the following two points. The first point is that an optical element 40 is positioned on an inner side of a first housing 70a. The second point is that the first housing 70a includes a first light transmissive window 76a and that a second housing 70b includes a second light transmissive window 76b. The structures of the first light transmissive window 76a and the second light transmissive window 76b are the same as the structure of the light transmissive window 76 shown in Fig. 11.
In the measuring device 100F, there is no portion where an output fiber 42 is extended. Therefore, in the measuring device 100F, compared with the measuring device 100E, it is possible to further shorten the output fiber 42, and to further reduce the possibility of noise occurring in a spectrum of a detection signal.
In the example shown in Fig. 12, since the optical element 40 is directly attached to the first light transmissive window 76a, it is possible to reduce the possibility of leakage of light other than irradiation light 20L2 that is emitted from the optical element 40 from the first housing 70a. Note that it is possible to dispose the optical element 40 away from the first light transmissive window 76a.
In the measuring device 100F according to the sixth embodiment, as in the measuring device 100A according to the first embodiment, it is possible to obtain Effects (1) to (3) described above. However, Effect (3) is obtained by one continuous output fiber 42 that is not extended from the first housing 70a and the second housing 70b. Further, in the measuring device 100F according to the sixth embodiment, unlike in the measuring device 100A according to the first embodiment, the first fiber extending portion 72a and the second fiber extending portion 72b are not required. Therefore, it is possible to simplify the structural components of the measuring device 100E and to keep component costs low. Further, since the output fiber 42 is short, it is possible to reduce the possibility of noise occurring in a spectrum of a detection signal.

(Seventh Embodiment)

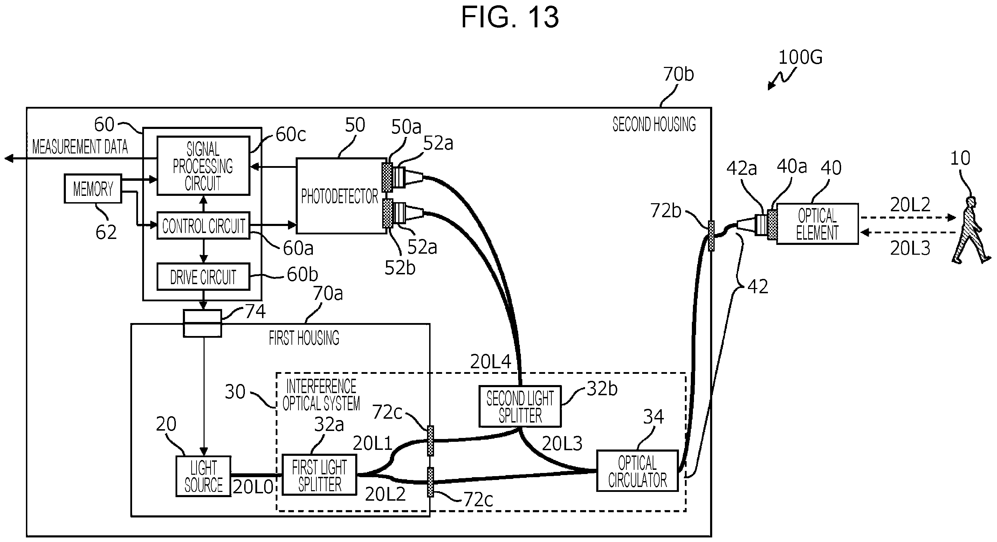

Next, with reference to Fig. 13, an example of a structure of a measuring device according to a seventh embodiment of the present disclosure is described while focusing on its differences from the measuring device according to the first embodiment. Fig. 13 is a block diagram schematically showing the structure of the measuring device according to the exemplary seventh embodiment of the present disclosure. A measuring device 100G shown in Fig. 13 differs from the measuring device 100A shown in Fig. 1 on the following points. In the measuring device 100G according to the present embodiment, a second light splitter 32b and an optical circulator 34 that constitute an interference optical system 30 are positioned on an outer side of a first housing 70a and on an inner side of a second housing 70b. In the embodiment, a fiber that guides reference light 20L1 that has been output from a first light splitter 32a and a fiber that guides irradiation light 20L2 are extended to the outside of the first housing 70a. Although the fiber that guides the reference light 20L1 and the fiber that guides the irradiation light 20L2 are directly extended from a third fiber extending portion 72c of the first housing 70a, they may be extended by providing a connector and a receptacle instead of the third fiber extending portion 72c.

The second housing 70b includes a second fiber extending portion 72b for extending an output fiber 42. The one continuous output fiber 42 is extended to the outside from the second housing 70b through the second fiber extending portion 72b. The second fiber extending portion 72b has a structure that allows the continuous output fiber 42 to be directly extended from the second housing 70b. For the second fiber extending portion 72b, a connector and a receptacle making the output fiber 42 attachable and detachable are not used. Therefore, at the output fiber 42, there is almost no reflection of the irradiation light 20L2 when the irradiation light 20L2 is guided.

In the measuring device 100G according to the seventh embodiment, the intensity of the irradiation light 20L2 that is emitted from an optical element 40 is $I_{out}$, and the intensity of the irradiation light 20L2 that is output from the first light splitter 32a is $I_{rad2}$. Light intensities that are lost due to loss and reflection at the optical element 40 and the optical circulator 34 are $L_{ele}$ and $L_{cir}$. When the loss in the optical fiber is so small that it can be ignored, $I_{out}$ is expressed as $I_{out} = I_{rad2} - L_{cir} - L_{ele}$. Since a portion of a light path of the irradiation light 20L2 that is output from the first light splitter 32a exists outside the first housing 70a, it is necessary that $I_{rad2}$ satisfy class 1. When a maximum light intensity that satisfies class 1 is $I_{limit}$, since $I_{limit} \geq I_{rad2} = I_{out} + L_{ele} + L_{cir}$, $I_{out}$ becomes an intensity that satisfies $I_{out} \leq I_{limit} - L_{ele} - L_{cir}$. Ordinarily, when $L_{ele}$ and $L_{cir}$ are compared with $I_{out}$, $L_{ele}$ and $L_{cir}$ are sufficiently (for example, greater than or equal to tens of dB) small, as a result of which even in the embodiment, it is possible to emit the irradiation light 20L2 having an intensity near the maximum intensity that satisfies class 1 from the optical element 40.

A feature of the structure of the embodiment is that the light source 20 and the first light splitter 32a are accommodated in the first housing 70a. In the measuring device 100G according to the seventh embodiment, as in the measuring device 100A according to the first embodiment, it is possible to obtain Effects (1) and (2) described above. It is possible to reduce noise in the spectrum of a detection signal by providing the output fiber 42 outside the first housing 70a and by using the output fiber 42 directly extended from the second housing 70b. Further, since, in the embodiment, it is possible to reduce the number of optical components that are accommodated in the first housing 70a, it is possible to further reduce the size of the first housing 70a and to form the first housing 70a at a low cost.

The structural components of the above-described measuring devices 100A to 100F may be combined in any way as long as there is no inconsistency. For example, a structure in which the first housing 70a accommodates not only the light source 20 and the interference optical system 30 but also the photodetector 50 in the measuring device 100B may be applied to the measuring devices 100D to 100F. Alternatively, a structure in which the interference optical system 30 and the photodetector 50 are supported by the chip 80 in the measuring device 100C may be applied to the measuring devices 100D to 100F. Alternatively, a structure in which the interference optical system 30 includes the third light splitter 32c instead of the optical circulator 34 in the measuring device 100D may be applied to the measuring devices 100E and 100F.

Industrial Applicability

The measuring devices of the embodiments of the present disclosure can be used in, for example, a distance measuring system that is installed in a vehicle, such as an automobile, a UAV (Unmanned Aerial Vehicle), or an AGV (Automated Guided Vehicle), or a security system that is set on an infrastructure side. The security system is capable of detecting, for example, a person or a vehicle.

Reference Signs List

10 object
20 light source
20L0 laser light

20L1 reference light
20L2 irradiation light
20L3 reflecting light
20L4 interference light
30 interference optical system
32a first light splitter
32b second light splitter
32c third light splitter
34 optical circulator
40 optical element
42 output fiber
50 photodetector
52 signal fiber
60 processing circuit
60a control circuit
60b drive circuit
60c signal processing circuit
62 memory
70a first housing
70b second housing
80 chip
90, 100A to 100G measuring device

**Claims**

1. A measuring device comprising:

   a light source that emits light;
   an interference optical system that separates the light that is emitted from the light source into reference light and irradiation light for irradiating an object, the interference optical system causing reflecting light that is produced by reflection of the irradiation light by the object and the reference light to interfere with each other to thereby produce interference light;
   an output fiber that is connected to the interference optical system and that guides the irradiation light;
   an optical element that is connected to the output fiber and that emits the irradiation light;
   a first housing that accommodates the light source and the interference optical system; and
   a second housing that accommodates the first housing,
   wherein the output fiber is directly extended from the first housing.

2. The measuring device according to claim 1,

   wherein the output fiber is extended from the first housing and the second housing, and
   wherein the optical element is disposed on an outer side of the second housing.

3. The measuring device according to claim 1,

   wherein the output fiber is extended from the first housing,
   wherein the optical element is disposed on an outer side of the first housing and on an inner side of the second housing, and
   wherein the second housing includes a light transmissive window that transmits the irradiation light.

4. The measuring device according to any one of claims 1 to 3,

   wherein the optical element emits the irradiation light and receives the reflecting light,
   wherein the interference optical system includes a first light splitter, a second light splitter, and a circulator or a third light splitter,
   wherein the first light splitter separates the reference light and the irradiation light from each other and outputs the reference light and the irradiation light, inputs into the second light splitter the reference light that has been output, and inputs into the circulator or the third light splitter the irradiation light that has been output, wherein the circulator or the third light splitter outputs the irradiation light coming from the first light splitter and inputs the irradiation light into the optical element, and outputs the reflecting light coming from the optical element and inputs the reflecting light into the second light splitter, and

wherein the second light splitter causes the reflecting light coming from the circulator or the third light splitter and the reference light coming from the first light splitter to interfere with each other to thereby produce the interference light.

5. The measuring device according to claim 4,

wherein when a light path length of a first path from the first light splitter to a photodetector that detects the interference light is $d_1$,

wherein a light path length of a second path from the second light splitter to the optical element is $d_2$,

wherein a light path length of a third path from the optical element to the photodetector is $d_3$, and

wherein a light path length of a fourth path from the first light splitter to the photodetector through a noise light path of the circulator or the third light splitter is $d_4$, a relationship

$$|d_2 + d_3 - d_1| \leq |d_4 - d_1|$$

is satisfied.

6. The measuring device according to any one of claims 1 to 3, further comprising:

a signal fiber that guides the interference light coming from the interference optical system; and
a photodetector that is connected to the signal fiber and that detects the interference light.

7. The measuring device according to claim 6,
wherein the photodetector is disposed on an outer side of the first housing and on an inner side of the second housing.

8. The measuring device according to claim 7,
wherein the signal fiber includes two connectors and a receptacle for connecting the two connectors, and the receptacle is attached to the first housing.

9. The measuring device according to claim 6,
wherein the photodetector is disposed on an inner side of the first housing.

10. The measuring device according to claim 9,
wherein the interference optical system and the photodetector are formed in an on-chip state.

11. The measuring device according to claim 6, further comprising:
a processing circuit that controls an operation of the light source and an operation of the photodetector and that processes a signal that is output from the photodetector, the processing circuit being positioned on an outer side of the first housing and on an inner side of the second housing.

12. The measuring device according to claim 11,
wherein the light source is capable of changing a frequency of the light with time.

13. A measuring device comprising:

a light source that emits light;
an interference optical system that separates the light that is emitted from the light source into reference light and irradiation light for irradiating an object, the interference optical system causing reflecting light that is produced by reflection of the irradiation light by the object and the reference light to interfere with each other to thereby produce interference light;
an output fiber that is connected to the interference optical system and that guides the irradiation light;
an optical element that is connected to the output fiber and that emits the irradiation light;
a photodetector that detects the interference light;

a first housing that accommodates the light source and the interference optical system;
a second housing that accommodates the first housing; and
a processing circuit that controls an operation of the light source and an operation of the photodetector and that processes a signal that is output from the photodetector, the processing circuit being disposed on an outer side of the first housing and on an inner side of the second housing.

14. The measuring device according to claim 13,
wherein the output fiber is one continuous optical fiber.

15. The measuring device according to claim 13 or claim 14,
wherein the light source is capable of changing a frequency of the light with time.

16. A measuring device comprising:

a light source that emits light;
an interference optical system that separates the light that is emitted from the light source into reference light and irradiation light for irradiating an object, the interference optical system causing reflecting light that is produced by reflection of the irradiation light by the object and the reference light to interfere with each other to thereby produce interference light;
an output fiber that is connected to the interference optical system and that guides the irradiation light;
an optical element that is connected to the output fiber and that emits the irradiation light;
a first housing that accommodates the light source and the interference optical system; and
a second housing that accommodates the first housing,
wherein the output fiber is disposed on an inner side of the first housing,
wherein the optical element is disposed on the inner side of the first housing,
wherein the first housing includes a first light transmissive window that transmits the irradiation light, and
wherein the second housing includes a second light transmissive window that transmits the irradiation light.

17. A measuring device comprising:

a light source that emits light;
an interference optical system that includes a splitter that separates the light that is emitted from the light source into reference light and irradiation light for irradiating an object, the interference optical system causing reflecting light that is produced by reflection of the irradiation light by the object and the reference light to interfere with each other to thereby produce interference light;
an output fiber that is connected to the interference optical system and that guides the irradiation light;
an optical element that is connected to the output fiber and that emits the irradiation light;
a first housing that accommodates the light source and the splitter; and
a second housing that accommodates the first housing,
wherein the output fiber is directly extended from the second housing.

FIG. 1

# FIG. 2

# FIG. 3

FIG. 4A

EP 4 535 029 A1

FIG. 4B

# FIG. 5

EP 4 535 029 A1

FIG. 6A

## FIG. 6B

EP 4 535 029 A1

## FIG. 7A

## FIG. 7B

## FIG. 8

# FIG. 9

EP 4 535 029 A1

## FIG. 10

EP 4 535 029 A1

FIG. 11

EP 4 535 029 A1

# FIG. 12

EP 4 535 029 A1

# FIG. 13

100G

SECOND HOUSING — 70b

MEASUREMENT DATA ←

SIGNAL PROCESSING CIRCUIT — 60, 60c

MEMORY — 62

CONTROL CIRCUIT — 60a

DRIVE CIRCUIT — 60b

74

PHOTODETECTOR — 50, 50a

52a

52a

52b

FIRST HOUSING — 70a

INTERFERENCE OPTICAL SYSTEM — 30

LIGHT SOURCE — 20

FIRST LIGHT SPLITTER — 32a

72c

20L0

20L1

20L2

SECOND LIGHT SPLITTER — 32b

20L4

20L3

OPTICAL CIRCULATOR — 34

72c

72b

42a — 40a — 40

OPTICAL ELEMENT

42

20L2

20L3

10

EP 4 535 029 A1

## INTERNATIONAL SEARCH REPORT

| International application No. |
| --- |
| **PCT/JP2023/003321** |

**A. CLASSIFICATION OF SUBJECT MATTER**

*G01S 7/481*(2006.01)i; *G01S 17/34*(2020.01)i
FI:   G01S7/481 Z; G01S17/34

According to International Patent Classification (IPC) or to both national classification and IPC

**B. FIELDS SEARCHED**

Minimum documentation searched (classification system followed by classification symbols)

G01S7/48-7/51; G01S17/00-17/95; G01C3/00-3/32; G01B9/00-11/30; G01N21/00-21/61

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2016-080409 A (NIPPON STEEL & SUMITOMO METAL CORP.) 16 May 2016 (2016-05-16)<br>paragraphs [0001]-[0009], [0033]-[0043], [0058]-[0068], fig. 1, 6-8 | 1-2, 4-6, 9-10, 12, 17 |
| A | | 3, 7-8, 11, 13-16 |
| Y | CN 106872960 A (BEIJING AEROSPACE INSTITUTE FOR METROLOGY AND MEASUREMENT TECHNOLOGY) 20 June 2017 (2017-06-20)<br>claims, paragraphs [0021]-[0033], fig. 1 | 1-2, 4-6, 9-10, 12, 17 |
| A | | 3, 7-8, 11, 13-16 |
| A | JP 2019-209344 A (PANASONIC INTELLECTUAL PROPERTY MANAGEMENT CO., LTD.) 12 December 2019 (2019-12-12)<br>paragraphs [0027]-[0029], fig. 1, 2 | 1-17 |
| A | JP 2017-169863 A (CANON KABUSHIKI KAISHA) 28 September 2017 (2017-09-28)<br>paragraphs [0014]-[0033], [0048]-[0058], fig. 1-3 | 1-17 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **27 February 2023** | **14 March 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

| INTERNATIONAL SEARCH REPORT<br>Information on patent family members | | | International application No.<br><br>**PCT/JP2023/003321** | |
|---|---|---|---|---|
| Patent document<br>cited in search report | Publication date<br>(day/month/year) | Patent family member(s) | Publication date<br>(day/month/year) | |
| JP 2016-080409 A | 16 May 2016 | (Family: none) | | |
| CN 106872960 A | 20 June 2017 | (Family: none) | | |
| JP 2019-209344 A | 12 December 2019 | (Family: none) | | |
| JP 2017-169863 A | 28 September 2017 | (Family: none) | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6274368 B
- JP 2019045200 A

- JP 2022010910 A

**Non-patent literature cited in the description**

- **CHRISTOPHER V. P.** *OFC*, 2016, vol. W4E (3)